# EUROPEAN PATENT APPLICATION

(11) **EP 4 545 501 A1**
(43) Date of publication of application: **30.04.2025**
(21) Application number: 24164285.9
(22) Date of filing: 18.03.2024
(51) Int. Cl.: C04B 28/00, C04B 28/34, C04B 14/10, C04B 14/30, C04B 22/06, C04B 22/16, C04B 111/00

(54) **PHOSPHO-ALUMINO-SILICATE INORGANIC POLYMER, AND PREPARATION METHOD AND USE THEREOF**

(30) Priority: 26.10.2023 CN 202311395589
(71) Applicant: Beijing Research Institute of Uranium Geology, Chaoyang District Beijing 100029 (CN)
(72) Inventor: WANG, Ju, Beijing, 100029 (CN); XIE, Xiaoli, Beijing, 100029 (CN); CHEN, Liang, Beijing, 100029 (CN); ZHAO, Fu, Beijing, 100029 (CN); LIU, Jian, Beijing, 100029 (CN); MA, Hongsu, Beijing, 100029 (CN)
(74) Representative: Swea IP Law AB

(57) **Abstract**

The disclosure belongs to the technical field of inorganic non-metallic cementitious materials, and provides a phospho-alumino-silicate inorganic polymer, and a preparation method and use thereof. The phospho-alumino-silicate inorganic polymer includes the following raw materials in parts by weight: 50 parts to 67 parts of a precursor raw material, 33 parts to 50 parts of an activator, and water; where the precursor raw material includes metakaolin and activated calcium oxide; the activated calcium oxide accounts for 3% to 15% of a weight of the precursor raw material; and the activator includes a phosphoric acid solution. The phospho-alumino-silicate inorganic polymer obtained by the above formula could not only meet the pH value less than 11 of a sealing material of the geological repository for a high-level radioactive waste, but also could effectively support cracks and broken rocks.

## Description

### TECHNICAL FIELD

The present disclosure relates to the technical field of inorganic non-metallic cementitious materials, and in particular to a phospho-alumino-silicate inorganic polymer, and a preparation method and use thereof.

### BACKGROUND

In recent years, nuclear energy has been developed and applied on a large scale as a clean energy source, but a resulting large amount of spent fuel is in urgent need to be dealt with. At present, it is generally believed by the major nuclear industry countries in the world that deep geological disposal measures are the most realistic and reliable approaches among many disposal options that high-level radioactive wastes are buried in geological bodies (granite, basalt, salt rock, or mudstone) with a depth of 500 m to 1000 m, and the wastes are permanently isolated from the human living environment through engineering and natural barrier systems. During construction of a geological repository for high-level radioactive wastes, rock is affected by a combination of excavation disturbance, groundwater movement, and swelling of the buffer material engineering barrier; thus, an initial stress field of the rock would be strongly disturbed, causing progressive damage processes such as damage, loosening, brittleness, spalling, and re-compaction of the surrounding rock and cracks in the near field, such that there are strong changes in the mechanical properties and transmission properties of the surrounding rock.

For these surrounding rocks and cracks, during the construction of the geological repository for high-level radioactive waste, some sealing or reinforcing materials must be adopted for reinforcement, thereby improving the decline of rock performance or preventing the damage to the surrounding rocks and cracks. High alkalinity of the existing ordinary Portland cement cementitious materials may cause an increased pH value of groundwater in the disposal repository; thus, the effectiveness of a buffering backfill material bentonite in the disposal repository for high-level radioactive waste may be affected, the expansibility of the buffering backfill material bentonite may be reduced, and the permeability of the buffering backfill material bentonite may be increased, which result in major changes in the pore structure and performance, thereby affecting the sealing of the disposal repository. Therefore, sealing/curing materials with low pH value (pH<11) and high durability have better effects in the surrounding environment.

Compared with ordinary Portland cement, the unique high durability and low pH value (pH<7) of the phospho-alumino-silicate inorganic polymer allow this material to be applied in extreme environmental conditions. In the study of building materials such as the Egyptian Pyramids built in about 2,500 before Christ and the "City of Jericho" in the Jordan Valley area of Palestine in 7,000 before Christ, it is discovered that there are microcrystalline and semicrystalline zeolite-like substances in ancient concrete similar to the structure of the phospho-alumino-silicate inorganic polymers, and it is speculated that the high durability of ancient concrete came from such substances. However, the phosphoric acid-activated phospho-alumino-silicate inorganic polymers have particularly obvious shortcomings such as difficulty in curing at ambient temperature, high heat release, and poor fluidity. Although a large amount of literature and practical experience have shown that the polymerization of phospho-alumino-silicate inorganic polymers could be accelerated by high-temperature curing, the curing method during the preparation of the phospho-alumino-silicate inorganic polymers is limited by actual engineering application environment. As a result, for the phospho-alumino-silicate inorganic polymers, the working performance, setting time, and early strength in actual engineering environments are issues that must be solved in actual engineering applications.

### SUMMARY

In view of this, the present disclosure is to provide a phospho-alumino-silicate inorganic polymer, and a preparation method and use thereof. In the present disclosure, the phospho-alumino-silicate inorganic polymer could significantly improve the working performance of traditional acid-excited phospho-alumino-silicate inorganic polymers, effectively reduce the setting time of inorganic polymers, and greatly improve the compressive strength of inorganic polymer stone bodies. In the present disclosure, it is of great significance for the use of the phospho-alumino-silicate inorganic polymer in the construction of a geological repository for high-level radioactive waste.

To achieve the above objectives, the present disclosure provides the following technical solutions:

Provided is a phospho-alumino-silicate inorganic polymer, including the following raw materials in parts by weight:
50 parts to 67 parts of a precursor raw material, 33 parts to 50 parts of an activator, and water; where
the precursor raw material includes metakaolin and activated calcium oxide;
the activated calcium oxide accounts for 3% to 15% of a weight of the precursor raw material; and
the activator includes a phosphoric acid solution.

In some embodiments, a mass ratio of a liquid to a solid (W/S) in the raw materials of the phospho-alumino-silicate inorganic polymer is in a range of 0.5: 1 to 1.2: 1;
the liquid is the water and water contained in the activator; and
the solid is the precursor raw material.

In some embodiments, the activated calcium oxide is obtained by calcining a limestone at a temperature of 850 °C to 1250 °C for 4 h.

In some embodiments, the activator further includes an aluminum dihydrogen phosphate solution, where a molar ratio of H₃PO₄ to Al(OH)₃ in the aluminum dihydrogen phosphate solution is 3.2: 1.

In some embodiments, the aluminum dihydrogen phosphate solution includes the following raw materials in parts by weight: 13 parts of an aluminum hydroxide powder, 61.5 parts of a phosphoric acid solution with a mass content of 85%, and 25.5 parts of water.

In some embodiments, the aluminum dihydrogen phosphate solution accounts for 0% to 70% of a weight of the activator, excluding 0%.

In some embodiments, the phosphoric acid solution has a mass content of 85%.

Also provided is a method for preparing the phospho-alumino-silicate inorganic polymer, including the following steps:
mixing the activator and the water to obtain a liquid material; and
mixing the precursor raw material and the liquid material to obtain a slurry, and curing the slurry to obtain the phospho-alumino-silicate inorganic polymer.

In some embodiments, the curing is performed under a standard curing for 7 days to 60 days; where the standard curing has a humidity of greater than 95%, and a temperature of 20 °C ± 2 °C.

Further provided is the use of the phospho-alumino-silicate inorganic polymer or the phospho-alumino-silicate inorganic polymer prepared by the above described method in the construction of a geological repository for high-level radioactive waste.

The present disclosure provides the phospho-alumino-silicate inorganic polymer, including the following raw materials in parts by weight: 50 parts to 67 parts of a precursor raw material, 33 parts to 50 parts of an activator, and water; where the precursor raw material includes metakaolin and activated calcium oxide; the activated calcium oxide accounts for 3% to 15% of a weight of the precursor raw material; and the activator includes a phosphoric acid solution. In the present disclosure, the phospho-alumino-silicate inorganic polymer obtained by the above formula could not only meet the pH value less than 11 of a sealing material of the geological repository for high-level radioactive waste, but also could effectively support cracks and broken rocks; thus, the phospho-alumino-silicate inorganic polymer could meet the requirements for sealing and reinforcing materials in the geological repository for the high-level radioactive waste. The activated calcium oxide added to the precursor raw material could significantly improve the working performances of a traditional acid-activated metakaolin-based inorganic polymer. In the present disclosure, the slurry shows desirable fluidity and could be cured under standard curing conditions, which could reduce the setting time of the inorganic polymer and improve the compressive strength of the inorganic polymer-based stone bodies.

### BRIEF DESCRIPTION OF THE DRAWINGS

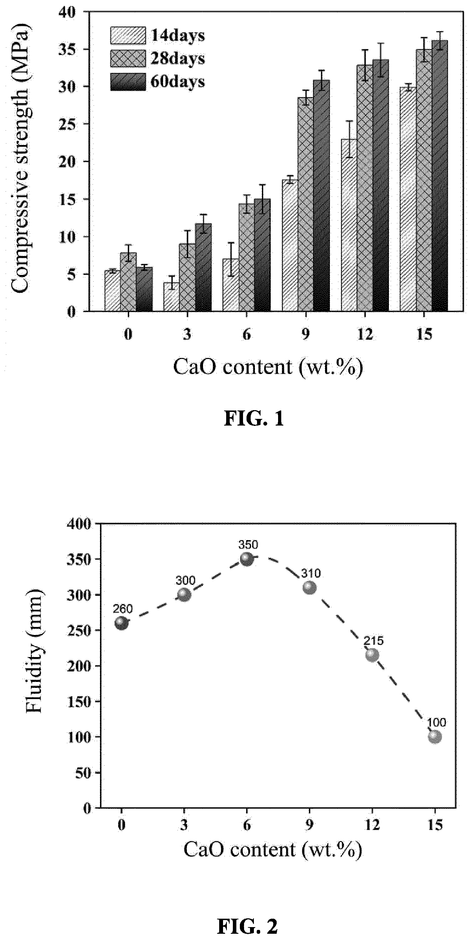

FIG. 1 shows the compressive strength of the phospho-alumino-silicate inorganic polymers at W/S=0.8 with metakaolin and activated calcium oxide as a precursor raw material (the activated calcium oxide accounts for 3%, 6%, 9%, 12%, and 15% of a weight of the precursor raw material, respectively) and a phosphoric acid solution as an activator;
FIG. 2 shows a fluidity of the phospho-alumino-silicate inorganic polymers at W/S=0.8 with metakaolin and activated calcium oxide as a precursor raw material (the activated calcium oxide accounts for 3%, 6%, 9%, 12%, and 15% of a weight of the precursor raw material, respectively) and a phosphoric acid solution as an activator;

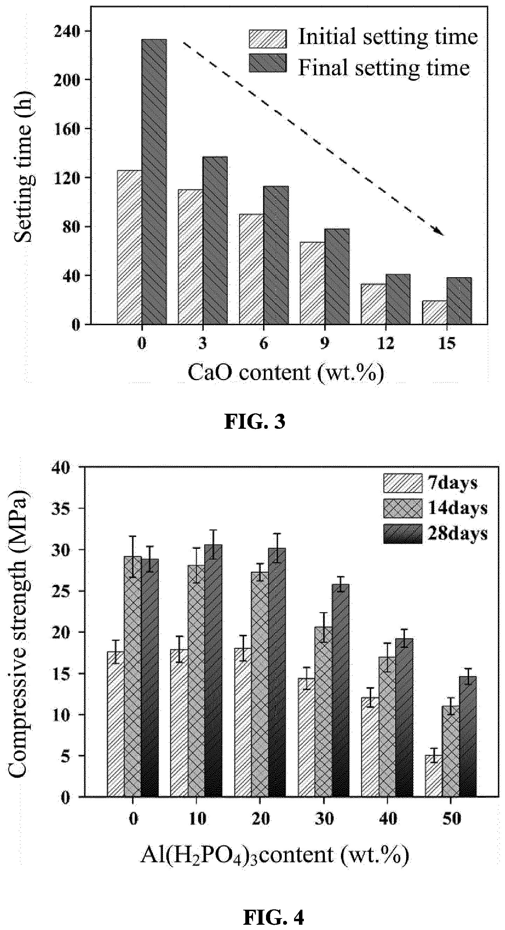

FIG. 3 shows a setting time of the phospho-alumino-silicate inorganic polymers at W/S=0.8 with metakaolin and activated calcium oxide as a precursor raw material (the activated calcium oxide accounts for 3%, 6%, 9%, 12%, and 15% of a weight of the precursor raw material, respectively) and a phosphoric acid solution as an activator;
FIG. 4 shows the compressive strength of the phospho-alumino-silicate inorganic polymers at W/S=0.8 with metakaolin and activated calcium oxide as a precursor raw material (the activated calcium oxide accounts for 8% of a weight of the precursor raw material) and a phosphoric acid solution and an aluminum dihydrogen phosphate solution as a composite activator (the aluminum dihydrogen phosphate accounts for 10%, 20%, 30%, 40%, and 50% of a weight of the composite activator respectively);

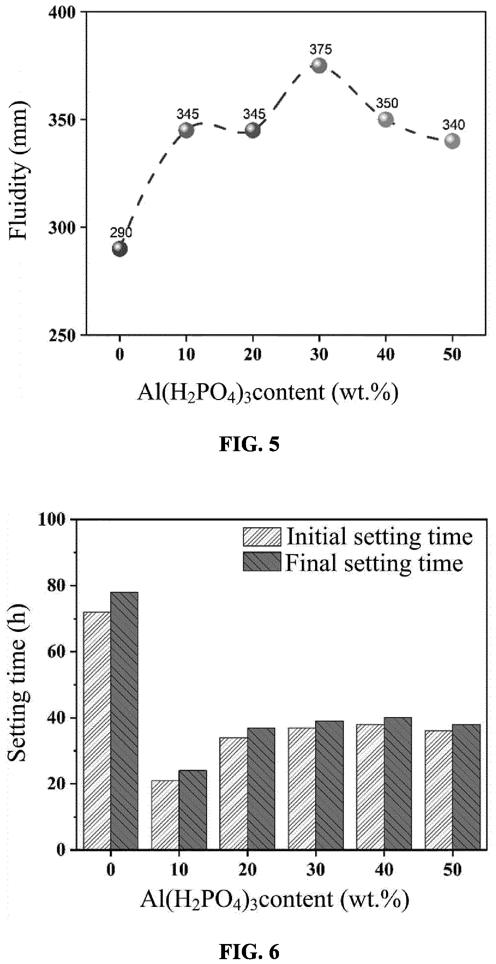

FIG. 5 shows a fluidity of the phospho-alumino-silicate inorganic polymers at W/S=0.8 with metakaolin and activated calcium oxide as a precursor raw material (the activated calcium oxide accounts for 8% of a weight of the precursor raw material) and a phosphoric acid solution and an aluminum dihydrogen phosphate solution as a composite activator (the aluminum dihydrogen phosphate accounts for 10%, 20%, 30%, 40%, and 50% of a weight of the composite activator respectively); and
FIG. 6 shows a setting time of the phospho-alumino-silicate inorganic polymers at W/S=0.8 with metakaolin and activated calcium oxide as a precursor raw material (the activated calcium oxide accounts for 8% of a weight of the precursor raw material) and a phosphoric acid solution and an aluminum dihydrogen phosphate solution as a composite activator (the aluminum dihydrogen phosphate accounts for 10%, 20%, 30%, 40%, and 50% of a weight of the composite activator respectively).

### DETAILED DESCRIPTION OF THE EMBODIMENTS

The present disclosure provides a phospho-alumino-silicate inorganic polymer, including the following raw materials in parts by weight:
50 parts to 67 parts of a precursor raw material, 33 parts to 50 parts of an activator, and water; where
the precursor raw material includes metakaolin and activated calcium oxide;
the activated calcium oxide accounts for 3% to 15% of a weight of the precursor raw material; and
the activator includes a phosphoric acid solution.

In some embodiments, the raw materials provided herein are all commercially-available products unless otherwise specified.

In the present disclosure, the raw materials of the phospho-alumino-silicate inorganic polymer include 50 parts to 67 parts by weight, preferably 55 parts to 60 parts by weight of the precursor raw material. The precursor raw material includes metakaolin and activated calcium oxide. In some embodiments, the activated calcium oxide is obtained by calcining a limestone at a temperature of 850 °C to 1250 °C, preferably 1000 °C to 1100 °C, and more preferably 1050 °C. In some embodiments, the calcining is performed for 4 h. In some embodiments, the metakaolin has a particle size of: D₉₅≤ 40 µm, and D₅₀≤ 12 µm. In some embodiments, the activated calcium oxide has a particle size of: D₉₅ ≤ 40 µm, and D₅₀ ≤ 12 µm. In some embodiments, the activated calcium oxide accounts for 3% to 15%, preferably 6% to 9% of a weight of the precursor raw material.

In the present disclosure, the raw materials of the phospho-alumino-silicate inorganic polymer include 33 parts to 50 parts by weight of the activator based on the weight of the precursor raw material. The activator includes a phosphoric acid solution. In some embodiments, the phosphoric acid solution has a mass content of 85%. In some embodiments, the activator further includes an aluminum dihydrogen phosphate solution, where the aluminum dihydrogen phosphate solution accounts for 0% to 70%, preferably 10% to 50%, and more preferably 10% to 30% of a weight of the activator, excluding 0%. In some embodiments, a molar ratio of H₃PO₄ to Al(OH)₃ in the aluminum dihydrogen phosphate solution is 3.2: 1. In some embodiments, the aluminum dihydrogen phosphate solution includes the following raw materials in parts by weight: 13 parts of an aluminum hydroxide powder, 61.5 parts of a phosphoric acid solution with a mass content of 85%, and 25.5 parts of water.

In some embodiments, the aluminum dihydrogen phosphate solution is prepared by a process including: mixing the aluminum hydroxide powder and the water to obtain an aluminum hydroxide solution; mixing the aluminum hydroxide solution and the phosphoric acid; and stirring a resulting material to obtain the aluminum dihydrogen phosphate solution. In some embodiments, mixing the aluminum hydroxide powder and the water is performed at a temperature of 85 °C. In some embodiments, mixing the aluminum hydroxide powder and the water is performed by heating the water, and then adding the aluminum hydroxide powder into the water; where the heating is conducted at a temperature of 85 °C. In some embodiments, mixing the aluminum hydroxide solution and the phosphoric acid is performed at a temperature of 85 °C. In some embodiments, mixing the aluminum hydroxide solution and the phosphoric acid is performed by heating the phosphoric acid, and then adding the aluminum hydroxide solution into the phosphoric acid; where the heating is conducted at a temperature of 85 °C, and in some embodiments, the heating is performed in a water bath. In some embodiments, the stirring is conducted at a speed of 30 rpm to 50 rpm for 30 min.

In the present disclosure, the raw materials of the phospho-alumino-silicate inorganic polymer include water.

In the present disclosure, a mass ratio of a liquid to a solid (W/S) in the raw materials of the phospho-alumino-silicate inorganic polymer is in a range of 0.5: 1 to 1.2: 1, preferably 0.6 : 1 to 0.9: 1, and more preferably 0.7: 1 to 0.8: 1. The liquid is the water and water in the activator. The solid is the precursor raw material.

The present disclosure further provides a method for preparing the phospho-alumino-silicate inorganic polymer, including the following steps:
mixing the activator and the water to obtain a liquid material; and
mixing the precursor raw material and the liquid material to obtain a slurry, and curing the slurry to obtain the phospho-alumino-silicate inorganic polymer.

In the present disclosure, the activator and the water are mixed to obtain a liquid material.

In the present invention, there is no special limitation on the mixing process of the activator and the water, as long as the two components can be mixed evenly.

After the liquid material is obtained, the precursor raw material and the liquid material are mixed to obtain a slurry, and the slurry is cured to obtain the phospho-alumino-silicate inorganic polymer.

In some embodiments, mixing the precursor raw material and the liquid material is performed by slow stirring and rapid stirring in sequence. In some embodiments, the slow stirring is conducted at a speed of 135 rpm to 145 rpm for 6 min. In some embodiments, the rapid stirring is conducted at a speed of 275 rpm to 295 rpm for 6 min.

In some embodiments, the slurry is molded before the curing. In some embodiments, the molding is conducted in a mold. In some embodiments, the mold has a dimension of 40 mm × 40 mm × 40 mm.

In some embodiments, the curing is performed under a standard curing for 7 days to 60 days; where the standard curing has a humidity of greater than 95% and a temperature of 20 °C ± 2 °C.

The present disclosure further provides use of the phospho-alumino-silicate inorganic polymer or the phospho-alumino-silicate inorganic polymer prepared by the above described method in the construction of a geological repository for high-level radioactive waste.

In the present disclosure, there is no special limitation on the way of use of the phospho-alumino-silicate inorganic polymer in the construction of the geological repository for the high-level radioactive waste, and those skilled in the art could make settings according to actual needs.

The phospho-alumino-silicate inorganic polymer, and the method and the use thereof provided by the present disclosure will be described in detail in connection with the following examples, but they should not be construed as limiting the scope of the present disclosure.

### Example 1

A phospho-alumino-silicate inorganic polymer consisted of the following raw materials in parts by weight:
50.7 parts of metakaolin, 5 parts of activated calcium oxide, and 44.3 parts of a phosphoric acid solution with a mass content of 85%, where a mass ratio of a liquid to a solid (W/S) was 0.8, and the activated calcium oxide accounted for 9% of a weight of the precursor raw material.

The activated calcium oxide was prepared by calcining a limestone at 1050 °C for 4 h.

The phospho-alumino-silicate inorganic polymer was prepared by the following steps:
the metakaolin and the activated calcium oxide were mixed to obtain a powder, the phosphoric acid solution and water were mixed to obtain a liquid material, and the powder and the liquid material were mixed and stirred at 140 rpm for 6 min, and then stirred at 285 rpm for 6 min to obtain a slurry. The slurry was injected into a 40 mm × 40 mm × 40 mm mold, and the obtained stone body was cured at a humidity of greater than 95% and at 20 °C ± 2 °C for 7 days to 60 days to obtain the phospho-alumino-silicate inorganic polymer.

The slurry of the phospho-alumino-silicate inorganic polymer has a fluidity of 310 mm. The compressive strengths of the phospho-alumino-silicate inorganic polymer are 14.4 MPa, 17.6 MPa, and 28.5 MPa at 7 days, 14 days, and 28 days, respectively, measured according to "Method of testing cements-Determination of strength" (GB/T 17671-1999). The phospho-alumino-silicate inorganic polymer has an initial setting time and a final setting time of 67 h and 78 h, respectively, measured according to "Test methods for water requirement of normal consistency, setting time and soundness of the Portland cement" (GB/T1346).

### Example 2

A phospho-alumino-silicate inorganic polymer consisted of the following raw materials in parts by weight:
51.2 parts of metakaolin, 4.5 parts of activated calcium oxide, 35.4 parts of a phosphoric acid solution with a mass content of 85%, and 8.9 parts of an aluminum dihydrogen phosphate solution, where a mass ratio of a liquid to a solid (W/S) was 0.8. The activated calcium oxide accounted for 8% of a weight of the precursor raw material, and the aluminum dihydrogen phosphate solution accounted for 20% of a weight of the activator.

The activated calcium oxide was prepared according to the corresponding process of Example 1.

The aluminum dihydrogen phosphate solution was prepared by the following steps: (1) according to the experimental ratio, 61.5 parts by weight of the phosphoric acid solution (with a mass content of 85%) was poured into a beaker, and the beaker was heated in a water bath to 85 °C. 25.5 parts by weight of water and 13 parts by weight of an aluminum hydroxide powder were weighed. The water was poured into another beaker. The other beaker was placed into a temperature-controlled magnetic stirrer at 85 °C, and the aluminum hydroxide powder was poured into the other beaker at a uniform speed to obtain an aluminum hydroxide solution. (2) the phosphoric acid solution obtained in step (1) was poured into a constant-temperature magnetic stirrer, and then the aluminum hydroxide solution obtained in step (2) was gradually added into the constant-temperature magnetic stirrer. (3) a resulting solution obtained in step (2) was stirred for 30 min to obtain the clear and transparent aluminum dihydrogen phosphate solution.

The phospho-alumino-silicate inorganic polymer was prepared by the following steps:
the metakaolin and the activated calcium oxide were mixed to obtain a powder, the phosphoric acid solution, the aluminum dihydrogen phosphate solution, and water were mixed to obtain a liquid material, and the powder and the liquid material were mixed and stirred at 140 rpm for 6 min, and then stirred at 285 rpm for 6 min to obtain a slurry. The slurry was injected into a 40 mm × 40 mm × 40 mm mold, and the obtained stone body was cured at a humidity of greater than 95% and at 20 °C ± 2 °C for 7 days to 60 days to obtain the phospho-alumino-silicate inorganic polymer.

The slurry of the phospho-alumino-silicate inorganic polymer has a fluidity of 345 mm. The compressive strengths of the phospho-alumino-silicate inorganic polymer are 18.0 MPa, 27.3 MPa, and 30.2 MPa at 7 days, 14 days, and 28 days, respectively, measured according to "Method of testing cements-Determination of strength" (GB/T 17671-1999). The phospho-alumino-silicate inorganic polymer has an initial setting time and a final setting time of 34 h and 37 h, respectively, measured according to "Test methods for water requirement of normal consistency, setting time and soundness of the Portland cement" (GB/T1346).

### Example 3

A phospho-alumino-silicate inorganic polymer consisted of the following raw materials in parts by weight:
51.2 parts of metakaolin, 4.5 parts of activated calcium oxide, and 44.3 parts of a phosphoric acid solution with a mass content of 85%, where a mass ratio of a liquid to a solid (W/S) was 0.8, and the activated calcium oxide accounted for 8% of a weight of the precursor raw material.

The phospho-alumino-silicate inorganic polymer was prepared according to the corresponding process of Example 1.

The slurry of the phospho-alumino-silicate inorganic polymer has a fluidity of 290 mm. The compressive strengths of the phospho-alumino-silicate inorganic polymer are 17.6 MPa, 29.1 MPa, and 28.8 MPa at 7 days, 14 days, and 28 days, respectively, measured according to "Method of testing cements-Determination of strength" (GB/T 17671-1999). The phospho-alumino-silicate inorganic polymer has an initial setting time and a final setting time of 35 h and 41 h, respectively, measured according to "Test methods for water requirement of normal consistency, setting time and soundness of the Portland cement" (GB/T1346).

### Example 4

A phospho-alumino-silicate inorganic polymer consisted of the following raw materials in parts by weight:
51.2 parts of metakaolin, 4.5 parts of activated calcium oxide, 35.4 parts of a phosphoric acid solution with a mass content of 85%, and 8.9 parts of an aluminum dihydrogen phosphate solution, where a mass ratio of a liquid to a solid (W/S) was 0.8, and the activated calcium oxide accounted for 8% of a weight of the precursor raw material and the aluminum dihydrogen phosphate solution accounted for 10% of a weight of the activator.

The phospho-alumino-silicate inorganic polymer was prepared according to the corresponding process of Example 2.

The slurry of the phospho-alumino-silicate inorganic polymer has a fluidity of 345 mm. The compressive strengths of the phospho-alumino-silicate inorganic polymer are 18.0 MPa, 27.3 MPa, and 30.2 MPa at 7 days, 14 days, and 28 days, respectively, measured according to "Method of testing cements-Determination of strength" (GB/T 17671-1999). The phospho-alumino-silicate inorganic polymer has an initial setting time and a final setting time of 21 h and 24 h, respectively, measured according to "Test methods for water requirement of normal consistency, setting time and soundness of the Portland cement" (GB/T1346).

### Comparative Example 1

A phospho-alumino-silicate inorganic polymer consisted of the following raw materials in parts by weight:
56 parts of metakaolin and 44 parts of a phosphoric acid solution with a mass content of 85%, where the mass ratio of a liquid to a solid (W/S) was 0.8.

The slurry of the phospho-alumino-silicate inorganic polymer has a fluidity of 260 mm. The compressive strengths of the phospho-alumino-silicate inorganic polymer are 0 MPa, 5.4 MPa, and 7.8 MPa at 7 days, 14 days, and 28 days, respectively, measured according to "Method of testing cements-Determination of strength" (GB/T 17671-1999). The phospho-alumino-silicate inorganic polymer has an initial setting time and a final setting time of 126 h and 233 h, respectively, measured according to "Test methods for water requirement of normal consistency, setting time and soundness of the Portland cement" (GB/T1346).

### Comparative Example 2

A phospho-alumino-silicate inorganic polymer consisted of the following raw materials in parts by weight:
56 parts of metakaolin, 35 parts of a phosphoric acid solution with a mass content of 85%, and 9 parts of an aluminum dihydrogen phosphate solution, where a mass ratio of a liquid to a solid (W/S) was 0.8, and the aluminum dihydrogen phosphate solution accounted for 20% of a weight of the activator.

The slurry of the phospho-alumino-silicate inorganic polymer has a fluidity of 295 mm. The compressive strengths of the phospho-alumino-silicate inorganic polymer are 0 MPa, 13.8 MPa, and 21.0 MPa at 7 days, 14 days, and 28 days, respectively, measured according to "Method of testing cements-Determination of strength" (GB/T 17671-1999). The phospho-alumino-silicate inorganic polymer has an initial setting time and a final setting time of 133 h and 159 h, respectively, measured according to "Test methods for water requirement of normal consistency, setting time and soundness of the Portland cement" (GB/T1346).

FIG. 1 shows the compressive strength of the phospho-alumino-silicate inorganic polymers at W/S = 0.8 with metakaolin and activated calcium oxide as a precursor raw material (the activated calcium oxide accounted for 3%, 6%, 9%, 12%, and 15% of a weight of the precursor raw material, respectively) and a phosphoric acid solution as an activator. As shown in FIG. 1, the replacement of metakaolin by activated calcium oxide in a certain proportion could effectively improve the compressive strength of the phospho-alumino-silicate inorganic polymer. The compressive strength of the phospho-alumino-silicate inorganic polymer is increased with an increase of the proportion of the activated calcium oxide. When the activated calcium oxide replaces 15% of metakaolin, the phospho-alumino-silicate inorganic polymer has compressive strengths as high as 29.9 MPa, 34.9 MPa, and 36.1 MPa under standard curing of 14 days, 28 days, and 60 days, respectively. When the activated calcium oxide replaces 9% of metakaolin (Example 1), the phospho-alumino-silicate inorganic polymer has compressive strengths of 17.6 MPa, 28.5 MPa, and 30.8 MPa at 14 days, 28 days, and 60 days, respectively. When the precursor raw material does not contain activated calcium oxide (Comparative Example 1), the phospho-alumino-silicate inorganic polymer has compressive strengths of only 5.4 MPa, 7.8 MPa, and 7.9 MPa at 14 days, 28 days, and 60 days, respectively.

FIG. 2 shows a fluidity of the phospho-alumino-silicate inorganic polymers at W/S = 0.8 with metakaolin and activated calcium oxide as a precursor raw material (the activated calcium oxide accounted for 3%, 6%, 9%, 12%, and 15% of a weight of the precursor raw material, respectively) and a phosphoric acid solution as an activator. As shown in FIG. 2, the fluidity of the slurry of the phospho-alumino-silicate inorganic polymer shows a trend of increasing and then decreasing as the dosage of the activated calcium oxide increased. The fluidity of Example 1 increases by approximately 19% compared to that of Comparative Example 1.

FIG. 3 shows a setting time of the phospho-alumino-silicate inorganic polymers at W/S = 0.8 with metakaolin and activated calcium oxide as a precursor raw material (the activated calcium oxide accounted for 3%, 6%, 9%, 12%, and 15% of a weight of the precursor raw material, respectively) and a phosphoric acid solution as an activator. As shown in FIG. 3, the setting time of the phospho-alumino-silicate inorganic polymer gradually decreases with the addition and dosage increase of the activated calcium oxide. When the activated calcium oxide replaces 15% of metakaolin, the phospho-alumino-silicate inorganic polymer has an initial setting time and a final setting time of 19 h and 38 h, respectively. When the precursor raw material does not contain the activated calcium oxide, the phospho-alumino-silicate inorganic polymer has an initial setting time and a final setting time of 126 h and 233 h, respectively.

FIG. 4 shows the compressive strength of the phospho-alumino-silicate inorganic polymers at W/S = 0.8 with metakaolin and activated calcium oxide as a precursor raw material (the activated calcium oxide accounted for 8% of a weight of the precursor raw material) and a phosphoric acid solution and an aluminum dihydrogen phosphate solution as a composite activator (the aluminum dihydrogen phosphate accounted for 10%, 20%, 30%, 40%, and 50% of a weight of the composite activator, respectively).

FIG. 5 shows a fluidity of the phospho-alumino-silicate inorganic polymers at W/S = 0.8 with metakaolin and activated calcium oxide as a precursor raw material (the activated calcium oxide accounted for 8% of a weight of the precursor raw material) and a phosphoric acid solution and an aluminum dihydrogen phosphate solution as a composite activator (the aluminum dihydrogen phosphate accounted for 10%, 20%, 30%, 40%, and 50% of a weight of the composite activator, respectively).

FIG. 6 shows a setting time of the phospho-alumino-silicate inorganic polymers at W/S = 0.8 with metakaolin and activated calcium oxide as a precursor raw material (the activated calcium oxide accounted for 8% of a weight of the precursor raw material) and a phosphoric acid solution and an aluminum dihydrogen phosphate solution as a composite activator (the aluminum dihydrogen phosphate accounted for 10%, 20%, 30%, 40%, and 50% of a weight of the composite activator, respectively). As shown in FIG. 4, FIG. 5 and FIG. 6, when metakaolin and activated calcium oxide are used as the precursor raw material, and the phosphoric acid solution and the aluminum dihydrogen phosphate solution are used as the activator, the phospho-alumino-silicate inorganic polymer has a significantly improved compressive strength and a significantly reduced setting time, and the slurry of the phospho-alumino-silicate inorganic polymer has a significantly improved working performance, compared with the phospho-alumino-silicate inorganic polymer that use metakaolin as the precursor raw material and phosphoric acid as the activator.

From the measurement results in FIG. 1 to FIG. 6 and the specific test results of Examples 1 to 4 and Comparative Examples 1 to 2, it can be found that:
(1) For Example 1, compared with Comparative Example 1: W/S=0.8, the activator is completely a phosphoric acid solution with a mass content of 85%; W/S=0.8 remained unchanged, only 9% of the metakaolin in the precursor raw material is replaced by activated calcium oxide. In the obtained phospho-alumino-silicate inorganic polymer of example 1, the compressive strengths at 7 days, 14 days, and 28 days are increased from 0 MPa, 5.4 MPa, and 7.8 MPa to 14.4 MPa, 17.6 MPa, and 28.5 MPa, respectively; the fluidity is increased from 260 mm to 310mm; and the initial setting time and final setting time are reduced from 126 h and 233 h to 67 h and 78 h, respectively.
(2) For Example 2, compared with Comparative Example 2: the dosage and proportion of the phosphoric acid solution and the aluminum dihydrogen phosphate solution in the activator (the mass ratio of the aluminum dihydrogen phosphate solution to the activator is 20%) are remained unchanged; W/S = 0.8 is remained unchanged, only 8% of the metakaolin in the precursor raw material is replaced by activated calcium oxide. In the obtained phospho-alumino-silicate inorganic polymer of example 2, the compressive strengths at 7 days, 14 days, and 28 days are increased from 0 MPa, 13.8 MPa, and 21.0 MPa to 18.0 MPa, 27.3 MPa, and 30.2 MPa, respectively; the fluidity is increased from 295 mm to 345 mm; and the initial setting time and final setting time are reduced from 133 h and 159 h to 34 h and 37 h, respectively.
(3) For Example 3, compared with Comparative Example 1: the activator is completely a phosphoric acid solution with a mass content of 85%; W/S = 0.8 remains unchanged, and only 8% of the metakaolin in the precursor raw material is replaced by activated calcium oxide. In the obtained phospho-alumino-silicate inorganic polymer of example 3, the compressive strengths at 7 days, 14 days, and 28 days are increased from 0 MPa, 5.4 MPa, and 7.8 MPa to 17.6 MPa, 29.1 MPa, and 28.8 MPa, respectively; the fluidity increased from 250 mm to 270 mm; and the initial setting time and final setting time are reduced from 126 h and 233 h to 72 h and 78 h, respectively.
(4) For Example 4, compared with Example 3: the composition of precursor (8% of the metakaolin in the precursor raw material is replaced by activated calcium oxide) remained unchanged; W/S = 0.8 remained unchanged, and only 85% of the phosphoric acid solution in the activator is replaced by 10% of the aluminum dihydrogen phosphate solution. In the obtained phospho-alumino-silicate inorganic polymer of Example 4, the compressive strengths at 7 days, 14 days, and 28 days are differed by 0.2 MPa, 1.0 MPa, and 1.8 MPa, respectively (within the normal deviation range); the fluidity is increased from 290 mm to 345 mm; and the initial setting time and final setting time are reduced from 72 h and 78 h to 21 h and 24 h, respectively.

The above descriptions are merely preferred embodiments of the present disclosure. It should be noted that those skilled in the art may further make several improvements and modifications without departing from the principle of the present disclosure, but such improvements and modifications should be deemed as falling within the scope of the present disclosure.

## Claims

1. A phospho-alumino-silicate inorganic polymer, comprising the following raw materials in parts by weight:
50 parts to 67 parts of a precursor raw material, 33 parts to 50 parts of an activator, and water; wherein the precursor raw material comprises metakaolin and activated calcium oxide; the activated calcium oxide accounts for 3% to 15% of a weight of the precursor raw material; and the activator comprises a phosphoric acid solution.

2. The phospho-alumino-silicate inorganic polymer of claim 1, wherein a mass ratio of a liquid to a solid in the raw materials of the phospho-alumino-silicate inorganic polymer is in a range of 0.5: 1 to 1.2: 1; the liquid is the water and water in the activator; and the solid is the precursor raw material.

3. The phospho-alumino-silicate inorganic polymer of claim 1, wherein the activated calcium oxide is obtained by calcining a limestone at a temperature of 850 °C to 1250 °C for 4 h.

4. The phospho-alumino-silicate inorganic polymer of claim 1, wherein the activator further comprises an aluminum dihydrogen phosphate solution, and a molar ratio of H₃PO₄ to Al(OH)₃ in the aluminum dihydrogen phosphate solution is 3.2: 1.

5. The phospho-alumino-silicate inorganic polymer of claim 4, wherein the aluminum dihydrogen phosphate solution comprises the following raw materials in parts by weight: 13 parts of an aluminum hydroxide powder, 61.5 parts of a phosphoric acid solution with a mass content of 85%, and 25.5 parts of water.

6. The phospho-alumino-silicate inorganic polymer of claim 4, wherein the aluminum dihydrogen phosphate solution accounts for 0% to 70% of a weight of the activator, excluding 0%.

7. The phospho-alumino-silicate inorganic polymer of claim 1, wherein the phosphoric acid solution has a mass content of 85%.

8. A method for preparing the phospho-alumino-silicate inorganic polymer of any one of claims 1 to 7, comprising the following steps:
mixing the activator and the water to obtain a liquid material; and mixing the precursor raw material and the liquid material to obtain a slurry, and curing the slurry to obtain the phospho-alumino-silicate inorganic polymer.

9. The method of claim 8, wherein the curing is performed under standard curing for 7 days to 60 days; and the standard curing has a humidity of greater than 95% and a temperature of 20 °C ± 2 °C.

10. Use of the phospho-alumino-silicate inorganic polymer of any one of claims 1 to 7 or the phospho-alumino-silicate inorganic polymer prepared by the method of any one of claims 8 to 9 in construction of a geological repository for high-level radioactive waste.
